# EUROPEAN PATENT APPLICATION

(11) **EP 4 088 630 A1**
(43) Date of publication of application: **16.11.2022**
(21) Application number: 22172698.7
(22) Date of filing: 11.05.2022
(51) Int. Cl.: A47J 37/04, A47J 37/07

(54) **BARBEQUE ELEVATOR**

(30) Priority: 11.05.2021 FI 20215561
(71) Applicant: Polar Metalli Oy, 94450 Keminmaa (FI)
(72) Inventor: Saukko, Matti, 94450 Keminmaa (FI); Rasinkangas, Sami, 94450 Keminmaa (FI)
(74) Representative: Heinonen & Co

(57) **Abstract**

The present disclosure discloses as embodied a barbeque elevator (300) comprising an elevator body (115) a crank mechanism (100a), (100b), a gearwheel (108), a loading spring (104), a locking pin (109), a chassis (301) with a guiding groove (G), the barbecue elevator (300). The barbeque elevator (300) comprises in said crank mechanism (100a), (100b) a gearwheel (108) and cable reel (105) on a common co-axial shaft (107) and least one of said items (105), (108) being in communication with a loading spring (104) to facilitate push or pull action (according to an embodiment variant) against said loading spring (104) along the shaft (107) to switch between spinning action and locking state position of the crank mechanism (100a), (100b) as determined on the position of the gearwheel (108) teeth in respect to the locking pin (109) to match to the gearwheel (108) teeth pitch in the locking state position and to omit to match in the spinning action position, wherein the elevator body (115) is connected to said cable reel (105) by a cable (106) with a counter piece (116) and arm (112) to facilitate the movement of the elevator body (115) on the guiding groove (G) on the chassis (301) according to the spinning action of the cable reel (105).

## Description

### FIELD OF THE INVENTION

Generally, embodiments of the present invention relates to grilling equipment and mechanisms in such. In particular, embodiments of the present invention pertains to a barbeque elevator according to the preamble of an independent claim directed thereto. Embodiments of the invention pertain also use of an embodied barbeque elevator in grilling equipment.

### BACKGROUND

Different victuals and foodstuff need different foodstuff specific time to mature to ripe enough when barbequed on such grilling equipment as a grill. One important aspect of barbecued articles is the correct temperature in which and according to which the exposure turns the barbeque article to delicious cuisines. On the other hand, some barbecue articles may need adjustment during their heating or roasting, so that they would not get burned on surface, but simultaneously being left unnecessarily raw inside.

In avoidance of such effects to leave the grilled article raw/ get overdone, in some parts, unequally, the barbequed foodstuff to end up with a status non-eatable, there has been solutions according to which the level of the barbequed object, a foodstuff article, over the heat source, is adjusted so that the distance to the heat source can be varied according to the state of the ripeness in the proceedings of the barbeque event.

It is also possible, that at the same time in the same barbeque session, several articles are barbequed in same session at once. It is also very likely that when several barbequed articles are heated or roasted in the same session, they can be of different species and consequently need a species specific temperature and timing for each, as well as they may need adjustment for the thermal flux to which they are exposed in such a barbeque event.

One aspect of the problems in the barbeque is that the set temperature could be maintained during the desired period, and when the operator of a barbeque device notices a need to change the temperature i.e. the thermal flux to the foodstuff in question being barbequed, the setting can be updated, maintained and easily re-set or restored when needed according to the user's purposes.

One aspect is such that the means used in the barbeque should be sufficiently robust and strong to tolerate the temperatures prevailing, as well as torques, twisting and loadings from the grilling plate and the foodstuff weight on such when the grill is loaded with the foodstuff articles, but also when the elevation is adjusted during the barbeque to modify the distance to the heat source in optimization of the foodstuff encountered heat flux.

From the grill operator's point of view, it is convenient to feel his/her body parts safe, i.e. the adjustments to be made can be done without a threat of burning any body parts, such as fingers or arms, for example. In addition, the locking of the grill plate to a certain position may be solely on the operator's manual responsibility, as in some known solution implemented by gear racks.

### SUMMARY OF THE INVENTION

The objective is to at least alleviate the problems described hereinabove not satisfactorily solved by the known grills and arrangements thereof, and to provide a feasible barbeque elevator that can keep the operators body parts sufficiently out of the reach of thermal flux from the heat source, but still able to keep the barbequed article controllably in the heat as being set, the setting being easily and reliably made.

The aforesaid objective is achieved by the disclosure of the embodiments of a barbeque elevator in accordance with the present invention as indicated in an independent claim directed to a barbeque elevator.

A barbeque elevator according to the disclosure of embodiments of the present invention comprises an elevator body a crank mechanism, a gearwheel, a loading spring, a locking pin, a chassis with a guiding groove, the embodied barbecue elevator being characterized in that, the barbeque elevator comprises in said crank mechanism a gearwheel and cable reel on a common co-axial shaft and at least one of said cable reel and gearwheel on a common co-axial shaft and at least one of said cable reel and gearwheel being in communication with a loading spring to facilitate push or pull action along the shaft, against said loading spring to switch between spinning action and locking state of the crank mechanism as determined on the position of the gearwheel teeth in respect to the locking pin to match to the gearwheel teeth pitch in the locking state and to omit the match during the spinning action, wherein the elevator body is connected to said cable reel by a cable to facilitate the movement of the elevator body in the guiding groove on the chassis according to the spinning action of the cable reel.

According to an embodiment the expression match in the embodiment has been considered as a mechanical contact between the gearwheel and the locking pin, so that the locking pin is preventing the gearwheel to spin on the shaft with the cable reel, when the crank mechanism is in the locking state.

According to an embodiment of the present disclosure the elevator body is attachable to a grill plate to be held for the grilling of a grilling object over or otherwise near a heat source of a hosting device such as a barbeque grill.

According to an embodiment of the present disclosure the chassis comprises at least on its one end at least one mounting pin of the barbeque elevator to mount to a barbeque grill and/or to support the barbeque elevator.

According to an embodiment of the present disclosure the crank mechanism further comprises at least one of the following:
- such a loading spring as unloaded in a locking position of the gearwheel and as loaded in a spinning position of said gearwheel,
   - such a loading spring and the gearwheel that are arranged operable against each other between the unloaded position in a locking state position and loaded position in the spinning action position, said locking state position and spinning action position being defined as the positions in a respect to the bearing location on said shaft in shaft-axial direction,
- the locking pin in the crank mechanism is adapted to match to a pitch of the gearwheel's teeth in said locking state position of the crank mechanism, so that the locking pin being shorter than the distance of the gearwheel to bearing as between said locking state position and said spinning action position on said shaft when the crank mechanism is pushed or pulled to set to the spinning action position by pushing or pulling against said loading spring to said spinning action position, so facilitating pass by of the gearwheel teeth pitch to meet the locking pin in said spinning action position,
- spinning reel, on said same shaft as said gearwheel, to coil up a cable connected to said spinning reel at one end of the cable and to an elevator body at the other end of said cable by the arm and the counter piece.

According to an embodiment of the present disclosure, the elevator body is mounted into said guiding groove on the chassis by a counter piece and an arm, to move the elevator body up and down along the cable being coiled up or down, to/from, the spinning reel when the crank mechanism is in spinning action position to spin said spinning reel and consequently to move the elevator body in the guiding groove in the guidance of the cable movement.
According to an embodiment of the present disclosure, the barbeque elevator comprises such an implementation of the spinning action position with said loading spring, said shaft, said locking pin, said gearwheel, said spinning reel and said cable so that
- the gearwheel is arranged to load the loading spring in the spinning action position by pull or push, in respective pull geometry or push geometry, co-axially on said saft, for the pulling or the pushing from the crank to set to the spinning reel to spinning action position with the mechanical communication with the gearwheel on the same shaft, to omit the pitch of the teeth of the gearwheel to match to the locking pin, when spin in the spinning action, or
- the spinning reel is arranged to load the loading spring in the spinning action position by a pull or a push in respective pull geometry or push geometry, co-axially on said saft, for the pulling or the pushing from the crank to set to the spinning reel to spinning action position with the mechanical communication with the gearwheel on the same shaft, to omit the pitch of the teeth of the gearwheel to match to the locking pin, when spin in the spinning action.

The barbeque elevator according to an embodiment of the disclosure can comprise such an implementation of the spinning action position with said loading spring, said shaft, said locking pin, said gearwheel, said spinning reel and said cable so that the gearwheel is arranged to load the loading spring in the spinning action position by a pull geometry co-axially on said saft, for pulling from the crank to set to the spinning reel to spinning action position during said pull against the loading spring.

According to an embodiment of the present disclosure the barbeque elevator comprises such a chassis that comprises at one end of the chassis a mounting pin to attach the barbeque elevator to its attachment means on a hosting device, such as a recess at the barbeque grill, to the barbeque grill. According to an embodiment, the chassis has cylindrical form and has a guiding groove for the moving path of the elevator body. The guiding groove can be in parallel direction with the cylindrical longitudinal axis.

According to an embodiment of the present disclosure the barbeque elevator comprises said elevator body that is adapted to comprise attachment means to support and/or attach to, at least one of the following as a grill plate: a grill, a plate, griddle, gridiron.

According to an embodiment of the present disclosure the barbeque elevator comprises such attachment means of the elevator body that comprises a tube being in alignment with the chassis, said tube holding the attachment means arranged to hold the grill plat and/or the tube to operate as a guide to said grill plate.

According to an embodiment of the present disclosure the barbeque elevator comprises such attachment means in the elevator body and an arm to connect, movably in the guiding groove in respect to said chassis, to said elevator body and to a counter piece.

According to an embodiment of the present disclosure the barbeque elevator comprises such an arm that is a single arm comprising an I-cross section, a cornered arm comprising an L-cross section , a twisted arm comprising a J-cross section, a branching arm with T-shaped arm cross section, a branching arm with Y-shaped cross section, such an arm that comprises a cross section of letter in the longitudinal direction of the arm.

According to an embodiment variant, said arm: has a cross section of at least one of the following an arm comprising letters: Q, W, E, R, T, Y, U, I, P, A, S, F, G, H, J, K, L, Z, X, C, V, N, M. Such embodiments can provide a variety of facilities to support the grill plate of different shape and size, even an ensemble of grill plates on the same elevator body. According to an embodiment also other shapes can be embodied with suitable arm, such as numerals, such as 1, 2, 3, 4, 5, 6, 7 or 9. According to an embodiment variant, the cross section is a cross section in the perpendicular direction of the elevator body movement direction in the guiding groove. According to an embodiment variant, the arm can have a second cross section as strengthening formation that is a cross section in the parallel direction of the elevator body movement direction in the groove. In such embodiment variants the cross-section shape can be used to strengthen the holding capacity of the arm to tolerate weight and/or weight-caused torque during the barbeque. The second cross section can be embodied with the shape of a letter and/or numeral. A skilled person knows many ways to implement such a profile of the second cross section as based on the embodiments.

According to an embodiment of the present disclosure the barbeque elevator comprises such an elevator body that is set to a path at a pre-set constant distance from the chassis during the movement along the guiding groove by the arm and counter piece.

According to an embodiment of the present disclosure the barbeque elevator comprises such a chassis that comprises a mounting pin to mount the barbeque elevator to a body of barbeque grill comprising the heat source.

A barbeque grill according to a present disclosure comprises a barbeque elevator according to an embodiment of the present disclosure.

According to an embodiment of the present disclosure the barbeque grill comprises such a grill that is an electric grill, a wood combustion-based grill, a char coal combustion-based grill, smoking box comprising grill and/or a gas grill.

A grilling method according to an embodiment of the present disclosure comprises:
- setting the object to be grilled on a grill plate attached to a barbeque elevator of the barbeque grill according to an embodiment of the present disclosure,
- heating said object to be grilled on an embodied barbeque grill of the present disclosure,
- adjusting the distance between the object to be grilled on said grill plate to the heat source of the barbeque grill by the crank mechanism of said elevator body of an embodied barbeque elevator.

A barbeque system according to an embodiment can comprise a barbeque grill according to an embodiment as a hosting device and at least one barbeque elevator according to an embodiment.

A barbeque system according to an embodiment of the present disclosure comprising mating means to fit at least one embodied barbeque elevator to the hosting device with a heat source in the hosting device's chassis, to mate with the pin of the barbeque elevator chassis of the barbeque elevator according to an embodiment of the present disclosure.

A barbeque system according to an embodiment of the present disclosure comprises such mating means to mate with such a hosting device with the heating source that is a fireplace, said mating means comprising attachment means to attach the barbeque elevator to said heating source's chassis or core.

According to an embodiment of the present disclosure the barbeque system can comprise in said mating means a pivotable joint connected to an ensemble of arms to provide a facility to the user to put the object to be gilled to the heat and/or taking said object to be grille out of the heat by moving said arms jointly joined by said joint, while the barbeque elevator is on a pivotable arm to be pivotably moved in a plane over the heat source, during at least one locking state of the barbeque elevator.

The utility of the present invention follows from a plurality of factors depending on each particular embodiment.

The distance between the grilled object and the heat source can be altered. Also, the attaching by the mounting pin to corresponding hole or recess and the mating means facilitates that the grill plate can be positioned to several positions in 3-D to the heat flux during the grill operation. The barbeque elevator can be used to adjust the distance of the object to be grilled to the heat source of the hosting device.

In addition, the locking state can be finely adjusted, dependently on the gearwheel and the number of the teeth to meet the locking pin, by the pitch therebetween. The locking also releases the users both hands to be used at the grilling event and the push or pull action as such provides a measure of security to avoid an accidental adjustment or dropping the grill plate to the heat with the consequential burn of the foodstuff and/or to the operator.

Any discussion of documents, acts, materials, devices, articles or the like which has been included in the present specification is not to be taken as an admission that any or all of these matters form part of the prior art base or were common general knowledge in the field relevant to the present invention as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The expression "a number of' refers herein to any positive integer starting from one (1), e.g. to one, two, or three.

The expression "a plurality of' refers herein to any positive integer starting from two (2), e.g. to two, three, or four.

Different embodiments of the present invention are disclosed in the dependent claims.

### BRIEF DESCRIPTION OF THE RELATED DRAWINGS

Next in the disclosure of the embodiments of the invention there are given examples on the embodiments in more detail with reference to the appended drawings without any intention to limit the scope of the embodiments only to the shown examples in respect to size, mutual geometry, order or position, in which
- Figs. 1a, 1b, 1c and 1d: illustrate each a schematic detail of an embodiment example according to the present disclosure of embodiments as combinable with one or more embodiments,
- Fig 2: illustrates a detail of an embodiment example according to the present disclosure of embodiments as combinable with one or more embodiments,
- Fig 3: illustrates an embodiment example according to the present disclosure of embodiments as combinable with at least one or more embodiments,
- Fig 4: illustrates an embodiment example on a barbeque grill according to the present disclosure of embodiments as combinable with at least one or more embodiments,
- Figs 5a to 5d: illustrate embodiment examples on a barbeque elevator according to the present disclosure of embodiments as combinable with at least one or more embodiments,
- Fig 6: illustrates an embodiment example on a grilling method according to the present disclosure of embodiments as combinable with at least one or more embodiments.

### DETAILED DESCRIPTION OF THE EMBODIMENTS

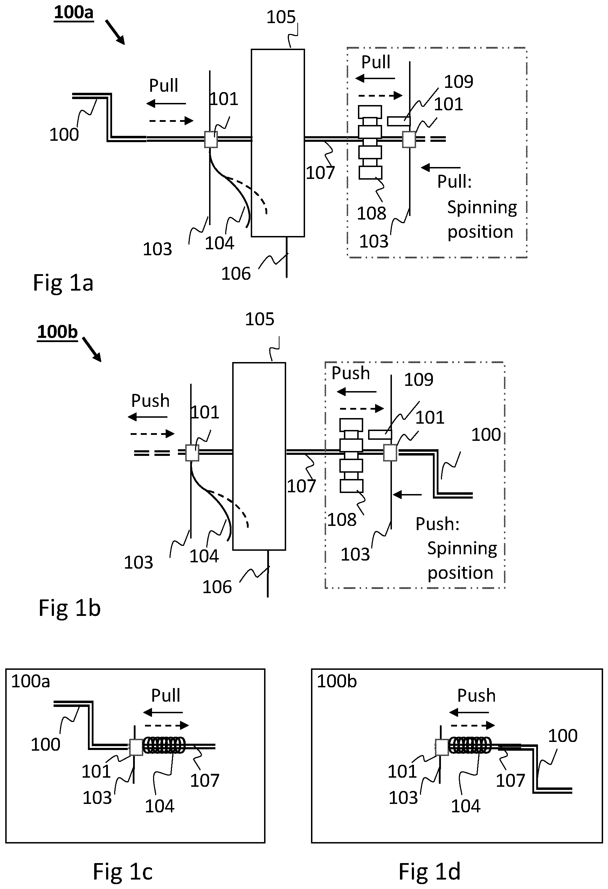

Figs. 1a and 1b illustrate each an optional detail of an embodiment example of the present disclosure of embodiments as combinable with at least one or more embodiments, to disclose optional two crank mechanisms 100a and 100b. Such a crank mechanism comprises a crank 100 that is arranged rotatable by the bearings 101, for example at the barbecue elevator's wall(s) 103. The wall as such can be round, as embodied with cylindrical mantel of the elevator body, but can be optionally of rectangular shape with two pairs of opposite walls 103.

The shaft 107 is functionally connected to the crank 100, i.e. directly as embodied in Figs 1a and 1b, or via a gear box, not shown as separate, but can be embodied as illustrated with the bearing 101 at the crank 100 side of the shaft 107, to comprise the gear box in the bearing 101 or the gear box can comprise the bearing101. The crank mechanism 100a as well as crank mechanism 100b, respectively also referred as pull mechanism and push mechanism, comprises a loading spring 104.

The loading spring 104 is embodied in Figs 1a and 1b as a leaf spring, but alternatively in Figs 1c and 1d the loading spring 104 can be embodied as a spiral spring. As based on the embodiments in the disclosure a skilled person can realize to use a stretchable alternatives to the push-type springs to load the spring to the energized position for the return to rest position after the adjustment by the crank has been made and released accordingly.

In Figs 1a and 1b the 104 has been drawn in a loaded position, so to facilitate the crank mechanism operable in the spinning action position, also referred in the figure for brevity by reference of Spinning position. The dashed line version of the 104 illustrates the spring in the rest position, at the locking state, when the locking pin 109 matched to the teeth pitch of the gearwheels 108 two immediately successive teeth, to hold the spinning stopped. The dashed arrows, pointing to the opposite direction as the pull or push arrows, illustrate the returning of the wholeness of the crank 100, shaft 107, cable reel 105 and the gearwheel 108 to the locking state position, where the locking pin 109 locks the gearwheel beyond the rotation as matching to the pitch of the gearwheel's 108 successive teeth.

Although in the examples of Figs 1a and 1b the loading spring 104, cable reel 105, and the gearwheel 108 are shown in the illustrated order from left to right on the shaft 107, in respect to the locking pin 109, on the basis of the embodiments a skilled person in the art is able to alter the order of said items to provide similar pull-/push mechanical embodiments with locking state position as based on the gearwheel 108, the locking pin 109 and the loading spring in several optional ways, also so that the loading spring 104 can get loaded in a position in which it is loaded by contact to the cable reel 105 at the pull /push action at the crank 100 connected operable to rotate the cable reel 105 on the shaft 107.

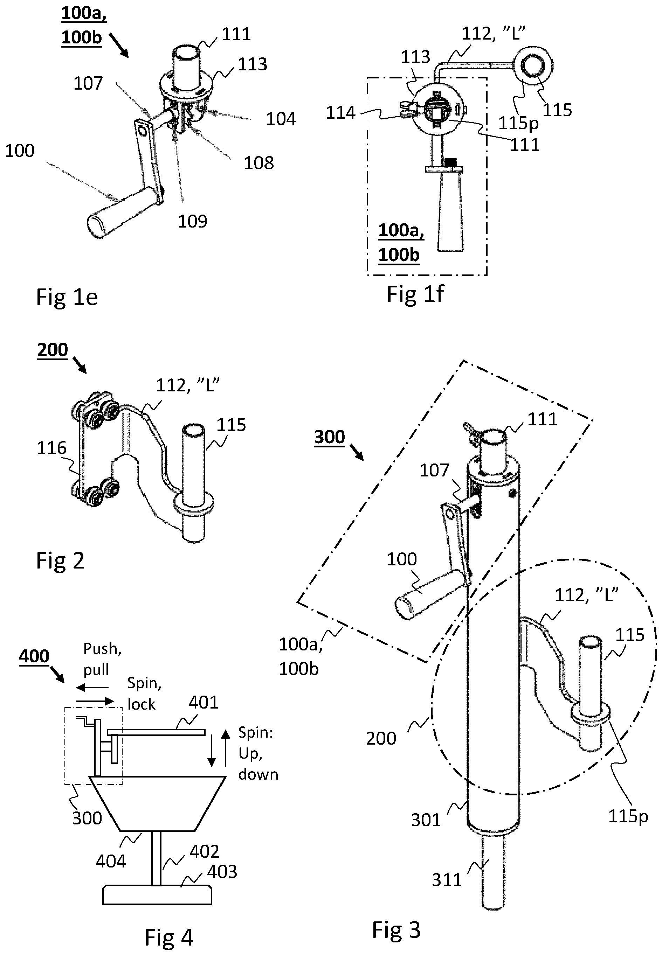

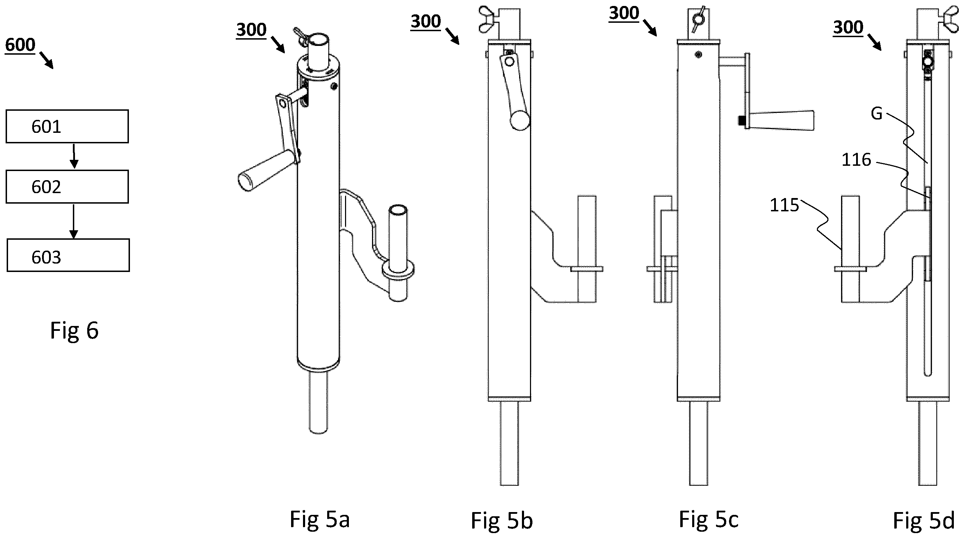

The cable reel 105 is on the same axis as the crank mechanism 100a, 100b and also as the gearwheel 108, which has been referred by the reference numeral 108 to point to one of its teeth. The teeth are drawn wider than the gearwheel's other parts for illustrative purposes only, without any intention to limit the embodiment to the shown example only. The axis implemented by the shaft 107 is solid, i.e. the gearwheel 108, crank 100 and the cable reel 105 spin together on the bearings 101, when the gearwheel has been released by using the crank 100 by pushing (100b) or pulling (100a) against the spring. The line 106 illustrates a cable, to be used in the adjustment of the elevator body 200 (Fig 2) in the guiding groove G (Fig 3, Fig 5d) of the barbeque elevator (300, Fig 3) chassis 301.

In Fig 1e the crank mechanism is illustrated as embodied in a suitable geometry to fit to a chassis 301 of the barbeque elevator 300. The detail 111 is embodied as an attachment pin 111 to be attached/mounted to a supporting attachment means of the hosting grill, providing an option to have support also from the upper position, where applicable.

According to an embodiment variant (Fig If), the attachment pin 111 in Fig 1e can comprise a securing pin or screw 114 (Fig If) to make the attachment more solid, where applicable. The item 113 is a support plate to support such an attachment. According to an embodiment, the item 113 as a lid with the pin 111 can be used to hold the crank mechanism as attached to the top of the chassis. According to an embodiment variant the item 113 can be used to limit the movement of the arm 112 so that it cannot drop by accident out of the guiding groove G (Fig 5d). A grill plate whose elevation is about to be adjusted in respect to the heating source is intended to be attached to the elevator body 115 (Figs 1f and 3). According to an embodiment the grill plate can be supported by attachment means as the support plate 115p with the elevator body 115.

The grill plate attachment means are comprised in the elevator body115 as illustrated as connected to the barbeque elevator in Fig 3, to which also the support plate 115p to support the grill plate belongs. The elevator body 115 can comprise a screw or pin to lock the grill plate to the elevator body and the support plate 115p, to hold the grill plate and the barbequed object on such in a barbeque session.

In Fig 1f the elevator body and the crank mechanism are shown as observed from above position of them, the barbeque elevator 300 as being covered by the crank mechanism (100a, 100b) and is not shown in Fig 1f for the in-cover parts. In the example the connecting arm 112 is embodied as an L-shaped arm to connect the elevator body 115 as indicated in Fig 2 to a counter piece 116, to which the cable 106 in Figs 1a and 1b is connected at the opposite side to the cable reel 105. According to an embodiment the counter piece 116 is a part of the elevator body 115, which are connected by the arm 112 as a part of the elevator body, too.

The arm 112 can be embodied in several ways, to have a different cross section as observed from the direction of Fig 1F, from the cylindrical axis direction, so that depending on the support needs to hold an elevator body 115, or an ensemble of such comprising a number of such, the cross section as observed from that direction can be embodied by such an arm 112 that has the cross section as such a letter, which has an arm or so that the arm can be attached to the cable 106 by the counter piece 116, the counter piece being inside the chassis 301 but in mechanical communication to the outside positioned elevator body 115 via the arm 112 or a part thereof.

Suitable western alphabet letters are consider as examples to embody such a cross section as Q, W, E, R, T, Y, U, I, P, A, S, F, G, H, J, K, L, Z, X, C, V, N, M, from which a skilled person can recognize an arm in the shape, but also from some of them a further branch as a part of the arm 112 to attach to the counter piece 116 through the guiding groove G. For example, Q cross section in that direction of view can have a large support area to support a large elevator body 115 so that the support plate 115p is considered as the O-shaped part of the Q-cross section, and the comma-like part as the arm part 112, even optionally as a twisted comma like an L. The counter piece 116 is embodied to be attached to the cable, to facilitate the movement of the elevator body 115 on the groove G define path, when the reel 105 is being spun.

Such embodiments can provide a variety of facilities to support the grill plate of different shape and size, even an ensemble of grill plates on the same elevator body, in suitable part where applicable. According to an embodiment example also other shapes can be embodied with suitable arm, such as numerals, such as 1, 2, 3, 4, 5, 6, 7 or 9. According to an embodiment variant, the arm has a cross section of the arm which is a cross section in the perpendicular direction of the elevator body movement direction in the groove.

According to an embodiment variant, the arm can have a second cross section as strengthening formation that is a cross section in the parallel direction of the elevator body movement direction in the groove. In such embodiment variants the second cross section shape can be used to strengthen the holding capacity of the arm to tolerate weight and/or weight caused torque during the barbeque. The second cross section can be embodied with the shape of a letter and/or numeral as shown as examples above, in suitable part. A skilled person knows many ways to implement such a profile of the second cross section as based on the embodiments.

In Fig 4 there is illustrated an embodied grill 400 according to the present disclosure, with an embodied grill elevator 300 (Fig 3, Figs 5a to 5d). The grill 400 comprises also a leg 402 as to support the heating part 404 and to separate it from the ground and the supporting ground plate 403. The number of legs is not limited only to the example. The arrows are indicative of the movement of the grilling plate 401 up and down, facilitated by the barbeque elevator 300 and the spinning of the cable 106 on the cable reel 105, so that the push or pull mechanism in the corresponding embodiment can switch between the lock state or spinning action, as disclosed in Figs 1a and 1b for the pull mechanism and push mechanism against the loading spring.

A barbeque elevator 300 in Fig 3 according to the disclosure of an embodiment of the present invention comprises an elevator body 115 a crank mechanism 100a, 100b, a gearwheel 108, a loading spring 104, a locking pin 109, a chassis 301 with a guiding groove G, the barbecue elevator 300, as apparent from the Figs 1a to Fig 3 and the shown details examples therein.

According to an embodiment he barbeque elevator 300 comprises in said crank mechanism 100a, 100b a gearwheel 108 and cable reel 105 on a common co-axial shaft 107 and least one of said items 105, 108 being in communication with a loading spring 104 to facilitate push or pull action (according to an embodiment variant) against said loading spring 104 along the shaft 107 to switch between spinning action and locking state of the crank mechanism 100a, 100b as determined on the position of the gearwheel 108 teeth in respect to the locking pin 109 to match to the gearwheel 108 teeth pitch in the locking state and to omit to match in the spinning action, wherein the elevator body 115 is connected to said cable reel 105 by a cable 106 to facilitate the movement of the elevator body in the guiding groove G on the chassis 301 according to the spinning action of the cable reel 105.

Figs 5a to 5d illustrate an embodied barbeque elevator 300 from different views.

As illustrated in Fig 4 for example, according to the present disclosure the elevator body 115 can be attachable to a grill plate 401. The support plate 115p can hold the grill plate 401 with the elevator body 115, which is movable by the movement of the crank mechanism embodied to move the elevator body. 115 by the cable 106 and the cable reel 105 when spin by the crank.

According to an embodiment of the present disclosure with reference to Figs 3 and 4, the chassis 301 can comprise at least on one end at least one mounting pin 311 of the barbeque elevator 300 to mount to an embodied barbeque grill 400. According to an embodiment variant there can be also in said barbeque grill 400 and the barbeque elevator 300 additional arms and joints therebetween to constitute a grilling system, according to which the grill plate can be pivoted aside from the heating area of the heat source in a plane over the heat source, but arms with the joints therebetween there are even more freedoms to make the pivot, also to adjust the distance from the pivoting center by the joints, to operate in analogue to a shoulder joint as the pivoting center, elbow as the joint between two arms and a pawn in a fist as a holder to hold the barbeque elevator to further support a grilling plate, to be moved in a plane at the set elevation by the barbeque elevator.

With reference to the Figs 1a and 1b as well as Figs 1c and 1d, the crank mechanism can further comprise at least one of the following:
- such a loading spring 104 as unloaded in a locking position of the gearwheel 108 and as loaded in a spinning position of said gearwheel 108,
- such a loading spring 104 and the gearwheel 108 are arranged to be operable against each other between the unloaded position in a locking state position and loaded position in the spinning action position, said locking state position and spinning action position being defined as the positions to the bearing 101 location on said shaft 107 in shaft-axial direction,
- the locking pin 109 in the crank mechanism 100a, 100b is adapted to match to the pitch between gearwheel's teeth 108 in said locking state position of the crank mechanism 100a 100b, so that the locking pin 109 being shorter than the distance between said locking state position and said spinning action position on said shaft 107 when the crank mechanism 100a, 100b is pushed or pulled, according to the embodiment variant, set to the spinning action position by pushing or pulling against said loading spring 104 to said spinning action position, so facilitating pass by of the gearwheel teeth 108 pitch to meet the locking pin 109 in said spinning action position, the loading spring returning the locking state when the crank is released and the pushing or pulling is stopped and the spinning decided to be stopped by the user.
- spinning reel 105, on said same shaft 107 as said gearwheel 108, to coil up a cable 106 connected to said spinning reel 105 at one end of the cable 106 and to an elevator body 115, at the other end of said cable 106, by the arm 112 and the counter piece 116, being parts of the elevator body 115.

With reference to Fig 3 and Fig 5f, the elevator body 115 is mounted into said guiding groove G on the chassis 301, to move up and down along the cable 106 (Fig 1a and 1b) being coiled up or down to/from the spinning reel 105 when the crank mechanism 100a or 100b is in spinning action position to spin said spinning reel 105 and consequently to move the elevator body 115 in the guiding groove G.

According to an embodiment of the present disclosure with reference to Figs 3, 5a to 5d the barbeque elevator 300 comprises such an implementation of the spinning action position with said loading spring 104, said shaft 107, said locking pin 109, said gearwheel 108, said spinning reel 105 and said cable 106 so that the gearwheel 108 is arranged to load the loading spring 109 in the spinning action position by a pull in a pull geometry co-axially on said saft 107, for pulling from the crank 100 to set to the spinning reel 105 to spinning action position with the mechanical communication with the gearwheel 108 on the same shaft 107.

According to an embodiment of the present disclosure with reference to Figs 3, 5a to 5d the barbeque elevator 300 comprises such an implementation of the spinning action position with said loading spring 104, said shaft 107, said locking pin 109, said gearwheel 108, said spinning reel 105 and said cable 106 so that the gearwheel 108 is arranged to load the loading spring 109 in the spinning action position by a push in a push geometry co-axially on said saft 107, for pushing from the crank 100 to set to the spinning reel 105 to spinning action position with the mechanical communication with the gearwheel 108 on the same shaft 107.

According to an embodiment of the present disclosure with reference to Fig 3, the barbeque elevator 300 comprises such a chassis 301 that comprises at one end of the chassis 301 a mounting pin 311 to attach the barbeque elevator 300 to its attachment means (a recess at the barbeque grill 100) to a barbeque grill 400.

According to an embodiment of the present disclosure the barbeque elevator 300 can comprise said elevator body 115 being adapted to comprise attachment means 115p to hold/support at least one of the following as a grill plate 401: a grill, a plate, griddle, gridiron.

According to an embodiment of the present disclosure the barbeque elevator 300 comprises such attachment means 115p of the elevator body 115 that comprises the elevator body115 as a tube being in alignment with the chassis 301, said tube 115 holding the attachment means 115p to hold/support the grill plate 401.

According to an embodiment of the present disclosure the barbeque elevator 300 can comprise such attachment means 115p that comprises an arm 112 to connect, movably in the guiding groove G in respect to said chassis 301, to said elevator body 115.

According to an embodiment of the present disclosure the barbeque elevator can comprise such an arm 112 that is a single arm comprising an I-cross section, a cornered arm comprising an L-cross section , a twisted arm comprising a J-cross section, a branching arm with T-shaped arm cross section, a branching arm with Y-shaped cross section, such an arm that comprises a cross section of letter.

According to an embodiment variant, said arm 112: has a cross section of at least one of the following letters: Q, W, E, R, T, Y, U, I, P, A, S, F, G, H, J, K, L, Z, X, C, V, N, M. Such embodiments can provide a variety of facilities support the grill plate 401 of different shape and size, even an ensemble of grill plates 401 on the same elevator body 115.

According to an embodiment of the present disclosure the barbeque elevator 300 comprises such an elevator body 115 that is at a pre-set constant distance from the chassis 301 during the movement along the guiding groove G.

According to an embodiment of the present disclosure the barbeque elevator 300 comprises such a chassis 301 that comprises a mounting pin 311 to mount the barbeque elevator 300 to a body of barbeque grill 400 comprising the heat source 404.

With reference to Fig 4 embodiments, an embodied barbeque grill 400 according to a present disclosure can comprise a barbeque elevator 300 according to an embodiment of the present disclosure, wherein the grill can be an electric grill, a wood burning grill, a char coal combustion-based grill, smoking box comprising grill and/or a gas grill.

Such an embodied grill 400 can be operated according to an embodied grilling method 600 as illustrated in Fig 6, wherein the grilling method 600 according to an embodiment of the present disclosure comprises:
- setting 601 the object to be grilled on a grill plate 401 attached to a barbeque elevator 300 of the barbeque grill 400 according to an embodiment of the present disclosure,
- heating said object to be grilled on an embodied grill 400 of the present disclosure,
- adjusting the distance between the object to be grilled on said grill plate 401 to the heat source 404 of the barbeque grill 400 by the crank mechanism 100a, 100b of said barbeque elevator 300 and the elevator body 115 of an embodied barbeque elevator 300.

A barbeque system according to an embodiment of the present disclosure comprising mating means 311 embodied as the mounting pin 311 fit recess or through hole to fit the barbeque elevator to the heat source 404 chassis by the pin 311 of the barbeque elevator chassis 301 of the barbeque elevator 300 according to an embodiment of the present disclosure.

A barbeque system according to an embodiment of the present disclosure comprises such mating means to the heating source 404 that is embodied as a fireplace, said mating means comprising attachment means to attach the barbeque elevator 300 to said heating source's 404 chassis, by arms so that the recess to the pin 311 is at one end of an arm, which can be pivotable.

According to an embodiment of the present disclosure the barbeque system can comprise in said mating means a further pivotable joint connected to an ensemble of arms to provide access to the user to put the object to be grilled to the heat and/or taking said object to be grille out of the heat flux, by moving said arms jointly joined by said joint.

Consequently, a skilled person may on the basis of this disclosure and general knowledge apply the provided teachings in order to implement the scope of the present invention as defined by the appended claims in each particular use case with necessary modifications, deletions, and additions.

## Claims

1. A barbeque elevator (300) comprising an elevator body (115) a crank mechanism (100a), (100b), a gearwheel (108), a loading spring (104), a locking pin (109), a chassis (301) with a guiding groove (G), the barbecue elevator (300) being **characterized in that**, the barbeque elevator (300) comprises in said crank mechanism (100a), (100b) a gearwheel (108) and cable reel (105) on a common co-axial shaft (107) and at least one of said cable reel (105) and gearwheel (108) being in communication with a loading spring (104) to facilitate push or pull action along the shaft (107), against said loading spring (104) to switch between spinning action and locking state of the crank mechanism (100a), (100b) as determined on the position of the gearwheel (108) teeth in respect to the locking pin (109) to match to the gearwheel (108) teeth pitch in the locking state and to omit the match during the spinning action, wherein the elevator body (115) is connected to said cable reel (105) by a cable (106) to facilitate the movement of the elevator body (115) in the guiding groove (G) on the chassis (301) according to the spinning action of the cable reel (105).

2. The barbeque elevator (300) of claim 1, wherein the crank mechanism (100a), (100b) further **comprises** at least one of the following:
- such a loading spring (104) as unloaded in a locking position of the gearwheel (108) and as loaded in a spinning position of said gearwheel (108),
- such a loading spring (104) and the gearwheel (108) that are arranged operable against each other between the unloaded position in a locking state position and loaded position in the spinning action position, said locking state position and spinning action position being defined as the positions in a respect to the bearing (101) location (103) on said shaft (107) in shaft-axial direction,
- the locking pin (109) in the crank mechanism (100a), (100b) is adapted to match to a pitch of the gearwheel's teeth (108) in said locking state position of the crank mechanism (100a), (100b), so that the locking pin (109) being shorter than the distance of the gearwheel (108) to bearing (101) as between said locking state position and said spinning action position on said shaft (107) when the crank mechanism (100a), (100b) is pushed or pulled to set to the spinning action position by pushing or pulling against said loading spring (104) to said spinning action position, so facilitating pass by of the gearwheel teeth (108) pitch to meet the locking pin (109) in said spinning action position,
- spinning reel (105), on said same shaft (107) as said gearwheel (108), to coil up a cable (106) connected to said spinning reel (105) at one end of the cable (106) and to an elevator body (115), at the other end of said cable (106), by the arm (112) and the counter piece (116).

3. The barbeque elevator (300) of claim 1 or 2, **wherein** the elevator body (115) is mounted into said guiding groove (G) on the chassis (301) by a counter piece (116) and arm (112), to move the elevator body (115) up and down along the cable (106) being coiled up or down, to/from, the spinning reel (105) when the crank mechanism (100a) or (100b) is in spinning action position to spin said spinning reel (105) and consequently to move the elevator body (115) in the guiding groove (G) as guided by the cable (106) movement.

4. The barbeque elevator (300) of claim 1, 2 or 3 **wherein** the barbeque elevator (300) comprises such an implementation of the spinning action position with said loading spring (104), said shaft (107), said locking pin (109), said gearwheel (108), said spinning reel (105) and said cable (106) so that
- the gearwheel (108) is arranged to load the loading spring (104) in the spinning action position by pull or push, in respective pull geometry or push geometry, co-axially on said saft (107), for the pulling or the pushing from the crank (100) to set to the spinning reel (105) to spinning action position with the mechanical communication with the gearwheel (108) on the same shaft (107), to omit the pitch of the teeth of the gearwheel (108) to match to the locking pin (109), when spin in the spinning action, or
- the spinning reel (105) is arranged to load the loading spring (104) in the spinning action position by a pull or a push in respective pull geometry or push geometry, co-axially on said saft (107), for the pulling or the pushing from the crank (100) to set to the spinning reel (105) to spinning action position with the mechanical communication with the gearwheel (108) on the same shaft (107), to omit the pitch of the teeth of the gearwheel (108) to match to the locking pin (109), when spin in the spinning action.

5. The barbeque elevator (300) according to anyone of the previous claims, **wherein** the barbeque elevator (300) comprises such a chassis (301) that comprises at one end of the chassis (301) a mounting pin (311) to attach the barbeque elevator (300) to its attachment means on a hosting device (400), such as a recess at the barbeque grill (400), to the barbeque grill (400).

6. The barbeque elevator (300) according to anyone of the previous claims, **wherein** the barbeque elevator (300) comprises such an elevator body (115) that is adapted to comprise attachment means (115p) to support at least one of the following as a grill plate (401): a grill, a plate, griddle, gridiron.

7. The barbeque elevator (300) according to anyone of the previous claims, **wherein** the barbeque elevator (300) comprises such attachment means of the elevator body (115) that comprises a tube being in alignment with the chassis (301), said tube holding the attachment means (115p) to hold the grill plate (401) and/or the tube to operate as a guide to said grill plate.

8. The barbeque elevator (300) according to anyone of the previous claims, **wherein** the barbeque elevator (300) comprises attachment means (115p) in the elevator body (115) and an arm (112) to connect, movably in the guiding groove (G), in respect to said chassis 301, said elevator body (115) to a counter piece (116).

9. The barbeque elevator (300) according to anyone of the previous claims, **wherein** the barbeque elevator (300) comprises such an arm (112) that is a single arm comprising an I-cross section, a cornered arm comprising an L-cross section , a twisted arm comprising a J-cross section, a branching arm with T-shaped arm, a branching arm with Y-shaped cross section, such an arm that comprises a cross section of letter in the longitudinal direction of the arm (112).

10. The barbeque elevator (300) according to anyone of the previous claims, **wherein** the barbeque elevator (300) comprises such an elevator body (115) that is at a pre-set constant distance from the chassis (301) during the movement of the elevator body (115) along the guiding groove (G) by the arm (112) and the counter piece (116).

11. The barbeque elevator (300) according to anyone of the previous claims, wherein the barbeque elevator (300) comprises such a chassis (301) that comprises a mounting pin (311) to mount the barbeque elevator (300) to a body of barbeque grill (400) comprising the heat source (404).

12. A barbeque grill (400) **characterized in that** the barbeque grill comprises as a hosting device a barbeque elevator (300) according anyone of the previous claims.

13. The barbeque grill (400) according to claim 12, **characterized in that** the grill (400) comprises an electric grill, a wood combustion-based grill, a char coal combustion-based grill, smoking box comprising grill and/or a gas grill.

14. A grilling method (600) wherein the grilling method (600) **comprises:**
- setting (601) the object to be grilled on a grill plate (401) attached to a barbeque elevator (300) of the barbeque grill (400),
- heating said object to be grilled on a barbeque grill (400) according to a claim 12 or 13,
- adjusting the distance between the object to be grilled on said grill plate (401) to the heat source (404) of the barbeque grill (400) by the crank mechanism (100a), (100b) of said barbeque elevator (300) and the elevator body (115) of said barbeque elevator (300).

15. A grilling system comprising a barbeque grill (400) according to claim 12 or 13, as a hosting device and at least one barbeque elevator (300) according to anyone of the claims 1 to 11.
